# EUROPÄISCHE PATENTSCHRIFT

(11) **EP 0 685 367 B1**
(45) Veröffentlichungstag und Bekanntmachung des Hinweises auf die Patenterteilung: **07.11.2001**
(21) Anmeldenummer: 95103518.7
(22) Anmeldetag: 10.03.1995
(51) Int. Cl.: B60R 21/26, C06D 5/08

(54) **Gasgenerator**
Gas generator
Générateur de gaz

(30) Priorität: 01.06.1994 DE 4419313
(43) Veröffentlichungstag der Anmeldung: 06.12.1995
(73) Patentinhaber: BREED AUTOMOTIVE TECHNOLOGY, INC., Lakeland, FL 33807-3050 (US)
(72) Erfinder: Specht, Martin, D-82340 Feldafing (DE)
(74) Vertreter: Nöth, Heinz, Dipl.-Phys.

(56) Entgegenhaltungen:
- EP-A- 0 539 872
- EP-A- 0 621 160
- DE-A- 2 016 286
- DE-A- 4 241 221
- DE-C- 4 303 169
- US-A- 3 810 655
- US-A- 5 060 973

## Beschreibung

Die Erfindung betrifft einen Gasgenerator für einen Airbag nach dem Oberbegriff des Patentanspruches 1.

Aus der DE 43 03 169 C ist ein derartiger Gasgenerator für einen Airbag bekannt. Das im Gasgenerator in Bereitschaft gehaltene flüssige Füllmedium besteht aus einem Brennstoff, einem Oxidationsmittel und einem Inertgas. Für das Oxidationsmittel können Distickstoffmonoxid und für das Inertgas Kohlendioxid zum Einsatz kommen. Der Brennstoffanteil besteht aus niedrig siedenden Olefinen, beispielsweise Ethen und Propen oder aus Ethan, Ammoniak oder Wasserstoff, oder aus Mischungen dieser Bestandteile.

Bei einem derartigen Gasgenerator genügt ein Vorratsraum mit relativ kleinem Volumen, um das Füllmedium in Bereitschaft zu halten.

Aufgabe der Erfindung ist es, weitere flüssige Füllmedien anzugeben, die zum Füllen eines Airbags in die Gasform übergeführt werden können.

Diese Aufgabe wird durch die kennzeichnenden Merkmale des Patentanspruches 1 gelöst.

Ein geeignetes flüssiges Füllmedium besteht aus drei Komponenten, wobei bezogen auf das Gesamtgewicht für die einzelnen Komponenten 4 bis 6 Gewichts-% Butan, 37 bis 50 Gewichts-% Distickstoffmonoxid und 44 bis 59 Gewichts-% Kohlendioxid in jeweils flüssiger Form verwendet werden.

Wenn der Anteil des Kohlendioxyds zu gering ist, ist die Mischung zu brisant, und es besteht Brandgefahr. Wenn der Anteil an Kohlendioxyd zu hoch bemessen ist, wird die Mischung zu inert, und die Reaktion verläuft nach dem Anzünden der Mischung zu träge.

In bevorzugter Weise liegen in der Mischung Distickstoffmonoxyd und Butan in einem Verhältnis von 9 : 1 vor.

Das aus Butan, Distickstoffmonoxyd und Kohlendioxyd bestehende Gemisch wird durch Zündung in das expandierende den Airbag füllende Gas gebracht. Das Gemisch wird bei Normaldruck gezündet. Die Aufbewahrung der drei Komponenten erfolgt im Vorratsraum, beispielsweise in getrennten Vorratsräumen, bei Überdruck, so daß bei Normaltemperatur die Komponenten in Flüssigform vorliegen.

Als flüssiges Füllmedium eignen sich ferner Perfluorcarbone, insbesondere solche, welche einen höheren Siedepunkt als 100°C haben. Geeignete Perfluorcarbone sind Perfluorotributylamin (C₁₂F₂₇N) mit einem Molekulargewicht von etwa 670 und einem Siedepunkt von 177°C, Perfluorodecalin (C₁₀F₁₈) mit einem Molekulargewicht von etwa 460 und einem Siedepunkt von 143°C und Perfluorooctan (C₈F₁₈) mit einem Molekulargewicht von 438 und einem Siedepunkt von 105°C.

Die Perfluorcarbone expandieren in ihrem Volumen auf bis zu dem 500-fachen ihres Flüssigkeitsvolumens, wenn sie über ihren Siedepunkt erhitzt werden, insbesondere solche Perfluorcarbone, bei denen die Bindungskräfte zwischen den Molekülen gering sind, gehen rasch von der Flüssigphase in die Gasphase über.

## Patentansprüche

1. Gasgenerator für einen Airbag mit einem als Flüssigkeit in einem Vorratsraum in Bereitschaft gehaltenen Füllmedium für den Airbag, welches bei Normaldruck und bei einer gegenüber der im Vorratsbehälter herrschenden Temperatur erhöhten Temperatur in ein expandierendes, den Airbag füllendes Gas überführbar ist, **dadurch gekennzeichnet, dass** das flüssige Füllmedium bezogen auf sein Gesamtgewicht aus 4 bis 6 Gewichts-% Butan, 37 bis 50 Gewichts-% Distickstoffmonoxid und 44 bis 59 Gewichts-% Kohlendioxid oder aus wenigstens einem Perfluorcarbon, welches einen Siedepunkt von mindestens 100°C hat, besteht.

2. Gasgenerator nach Anspruch 1, **dadurch gekennzeichnet, dass** das Gewichtsanteilverhältnis von Butan zu Distickstoffmonoxid 1 : 9 beträgt.

## Claims

1. Gas generator for an airbag with an inflation medium in liquid form for the airbag, contained in readiness for use in a storage space, which medium can be converted to a gas which expands and inflates the airbag at normal pressure and at a temperature that is higher than the temperature prevailing in the storage space, **characterised in that** the liquid inflation medium consists of 4- 6 wt.% butane, 37 - 50 wt.% dinitrogen monoxide and 44 - 59 wt.% carbon dioxide based on the total weight, or of at least one perfluorocarbon with a boiling point of at least 100°C.

2. Gas generator according to claim 1, **characterised in that** the weight proportion ratio of butane to dinitrogen monoxide is 1:9.

## Revendications

1. Générateur de gaz pour un coussin d'air contenant un moyen de remplissage du coussin d'air tenu à disposition sous forme de liquide dans un réservoir, pouvant être transformé en présence d'une pression normale et d'une température accrue par rapport à celle existant dans le réservoir en un gaz à expansion remplissant le coussin d'air, **caractérisé en ce que** le moyen de remplissage liquide est composé, par rapport à son poids total, de 4 à 6% en poids de butane, de 37 à 50% en poids de monoxyde de diazote et de 44 à 59% en poids de dioxyde de carbone ou d'au moins un perfluocarbone, ayant un point d'ébullition d'au moins 100°C.

2. Générateur de gaz selon la revendication 1, **caractérisé en ce que** le rapport en poids entre le butane et le monoxyde de diazote est de l'ordre de 1:9.
